# DEMANDE DE BREVET EUROPEEN

(11) **EP 0 904 997 A1**
(43) Date de publication de la demande: **31.03.1999**
(21) Numéro de dépôt: 98118364.3
(22) Date de dépôt: 29.09.1998
(51) Int. Cl.: B60S 1/24, F16B 39/22

(54) **Dispositif d'entraînement pour un système d'essuie-glace de véhicule automobile**

(30) Priorité: 30.09.1997 FR 9712159
(71) Demandeur: VALEO SYSTEMES D'ESSUYAGE, 78320 La Verrière (FR)
(72) Inventeur: Princet, Joel, 86100 Chatellerault (FR)
(74) Mandataire: Gamonal, Didier

(57) **Abrégé**

L'invention propose un dispositif d'entraînement pour un système d'essuie-glace de véhicule automobile, du type dans lequel une (10) bielle porte une rotule (12) munie d'une surface inférieure de portée (18) et d'une tige filetée (24) qui est engagée au travers d'un orifice oblong (26) de la bielle (10) pour serrer, à l'aide d'un écrou (48), la surface de butée (18) contre une face supérieure (20) de la bielle (10),
caractérisé en ce que la face supérieure (20) de la bielle (10) comporte une couche de surface (30) qui est déformée plastiquement lors du serrage de telle sorte que la surface de portée (18) de la rotule (12) marque son empreinte dans la face supérieure (20), pour assurer l'immobilisation de la rotule (12) selon la direction d'allongement de l'orifice oblong (26).

## Description

L'invention concerne un dispositif d'entraînement pour un système d'essuie-glace de véhicule automobile comportant des moyens perfectionnés de fixation d'une rotule.

L'invention concerne plus particulièrement un dispositif d'entraînement pour un système d'essuie-glace de véhicule automobile, du type comportant deux bielles qui sont reliées par une articulation à rotule, du type dans lequel l'une des bielles, sensiblement en forme de plaque, porte une rotule munie d'une surface inférieure de portée et d'une tige filetée qui s'étend perpendiculairement à la surface de portée et qui est engagée au travers d'un orifice oblong aménagé dans la bielle, et du type dans lequel un écrou est vissé sur la tige filetée, en appui contre une face inférieure de la bielle, pour serrer la surface de butée contre une face supérieure de la bielle.

On trouve par exemple de telles articulations à rotule dans des dispositifs d'entraînement dans lesquels un moteur électrique, éventuellement associé à un réducteur, entraîne en balayage alterné un ou deux essuie-glaces solidaires d'un arbre d'entraînement qui est monté à rotation autour de son axe par rapport au véhicule.

A l'aide d'un mécanisme à bielles et à manivelles, il est possible par exemple de transformer un mouvement rotatif continu de l'arbre de sortie du moteur d'entraînement en un mouvement rotatif alterné de l'arbre d'entraînement de chaque essuie-glace. En fonction de la géométrie de ce mécanisme, et notamment en fonction de la longueur des bielles, il est possible de faire varier la course angulaire de chaque essuie-glace, et ainsi d'obtenir, à l'aide du même mouvement de sortie de l'arbre de sortie du moteur, deux courses angulaires différentes pour chacun des deux essuie-glace.

Il en ressort donc qu'il est donc particulièrement important de pouvoir bien maîtriser la géométrie du mécanisme et notamment la longueur des bielles qui sont articulées entre elles par des articulations à rotule, mais aussi le positionnement des différents éléments entre eux.

Or, d'un véhicule à l'autre, il se peut que des dispersions apparaissent dans les différentes dimensions caractéristiques du mécanisme et qu'il en résulte des courses angulaires de l'essuie-glace non satisfaisantes.

Aussi, il a déjà été proposé de pouvoir faire "varier" la longueur d'une bielle d'un tel mécanisme en pouvant régler la position de la rotule de l'articulation à rotule sur cette bielle.

Pour cela, la rotule est fixée au travers d'un trou oblong, formant une lumière de réglage, et sa position est déterminée par serrage au montage.

Cependant, il est apparu que les différents dispositifs proposés jusqu'à présent se montraient soit trop complexes à réaliser, soit insuffisamment fiables quant à la tenue dans le temps de la position exacte de la rotule sur la bielle dans son trou oblong.

Aussi, l'invention a pour objet de proposer un moyen simple et fiable de fixation d'une rotule sur une bielle qui permet de garantir une position précise de la rotule au cours du temps en dépit des efforts transmis et des vibrations supportées par le mécanisme.

Dans ce but, l'invention propose un dispositif d'entraînement du type décrit précédemment, caractérisé en ce que l'une des deux faces en regard, la face supérieure de la bielle et la surface de portée de la rotule, comporte une couche de surface qui est déformée plastiquement lors du serrage de telle sorte qu'une empreinte de l'une de ces faces est marquée sur la surface de l'autre, pour assurer l'immobilisation de la rotule par rapport à la bielle selon la direction d'allongement de l'orifice oblong.

Selon des modes de réalisation particuliers de l'invention :
- le profil de la surface de butée n'est pas circulaire de telle sorte que la rotule est immobilisée en rotation par rapport à la bielle ;
- en section axiale, le profil de la surface de butée est délimité par des bords à angles vifs ;
- la couche de surface à déformer comporte un moletage qui est déformé plastiquement lors du serrage ;
- le moletage est réalisé sous la forme de stries agencées perpendiculairement à la direction d'allongement de l'orifice oblong ;
- l'orifice oblong est allongé selon la plus grande dimension de la bielle ;
- une rondelle à dents est interposée entre la face inférieure de la bielle et l'écrou pour immobiliser ce dernier en rotation.

D'autres caractéristiques et avantages de l'invention apparaîtront à la lecture de la description détaillée d'un exemple de réalisation qui suit, dans lequel la face supérieure de la bielle porte la couche déformée plastiquement, accompagnée des dessins annexés dans lesquels :
- la figure 1 est une vue en perspective éclatée de la fixation d'une rotule sur une bielle conformément aux enseignements de l'invention ;
- la figure 2 est une vue partielle de la bielle de la figure 1 illustrant l'empreinte marquée par la surface de portée de la rotule après son serrage contre la couche de surface de la face supérieure de la bielle.

On a illustré sur les figures une bielle 10 d'un mécanisme à bielles et à manivelles faisant partie d'un dispositif d'entraînement d'un système d'essuie-glace de véhicule automobile.

La bielle 10 se présente ici sous la forme d'un élément de plaque de faible épaisseur et allongé selon une direction longitudinale A1. La bielle 10 présente ainsi deux faces longitudinales parallèles, sensiblement horizontales sur les figures, supérieure 20 et inférieure 22.

Une rotule 12 est destinée à être fixée à une des extrémités de la bielle 10. La rotule 12 comporte un corps principal sensiblement sphérique 14 destiné à réaliser une partie d'une articulation à rotule et une plaque de portée 16 qui est sensiblement tangente au corps principal sphérique 14. La plaque de portée 16 comporte une face inférieure sensiblement plane 18 qui est destinée à venir en appui contre la face supérieure 20 de la bielle 10.

La rotule 12 comporte par ailleurs une tige filetée 24 qui s'étend vers le bas depuis la plaque de portée 16, selon un axe A2 sensiblement perpendiculaire à la surface de portée 18 et à la direction longitudinale A1 de la bielle 10. La tige filetée 24 est reçue au travers d'un orifice oblong 26, en forme de lumière, aménagé dans la bielle 10.

L'orifice 26 est allongé selon la direction longitudinale A1 de la bielle 10. L'extrémité inférieure de la tige filetée 24 dépasse en dessous de la face inférieure 22 de la bielle 10 de manière qu'un écrou 28 puisse être vissé sur la tige filetée 24 et permette ainsi la fixation de la rotule 12, la surface de portée 18 de celle-ci étant serrée en appui contre la face supérieure 20 de la bielle 10.

La tige filetée 24 présente un diamètre qui est sensiblement égal à la largeur transversale de l'orifice oblong 26 de sorte que la rotule 12 ne peut se déplacer par rapport à la bielle 10 que selon la direction longitudinale de l'orifice 26.

Conformément aux enseignements de l'invention, la surface supérieure 20 de la bielle 10 comporte, autour de l'orifice oblong 26, une zone qui est munie d'un moletage 30 réalisé sous la forme de stries perpendiculaires à la direction A1 d'allongement du trou oblong 26. Les stries 30 forment ainsi une couche de surface qui est susceptible d'être déformée plastiquement par la surface de portée 18 de la rotule 12 au cours du serrage de l'écrou 28.

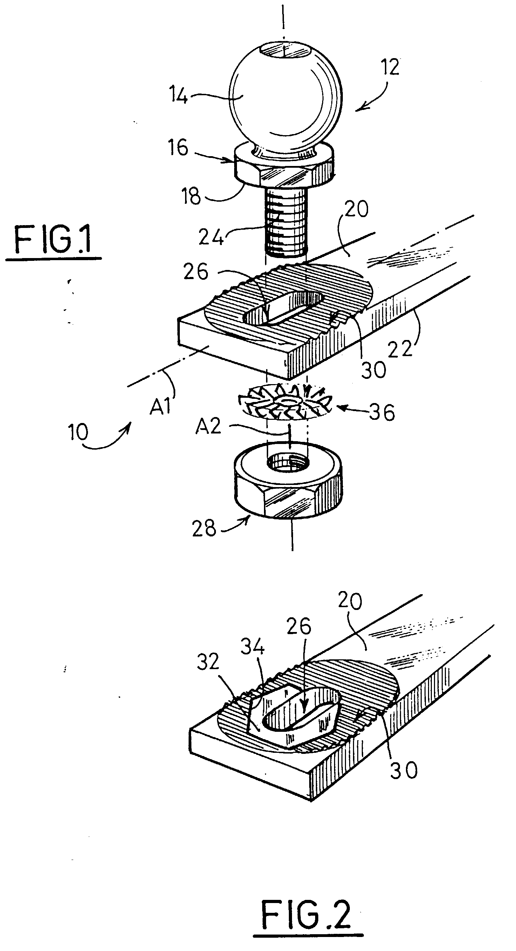

Comme on peut le voir sur la figure 2, il est en effet prévu que la surface de portée 18 marque une empreinte 32 en s'enfonçant dans la couche de surface déformable plastiquement.

L'empreinte 32 qui est ainsi formée en creux dans la face supérieure 20 est délimitée par un contour 34 qui suit le profil externe de la surface de portée 18. Ce contour 34, formant une marche, empêche ainsi que la surface de portée 18 ne puisse glisser le long de la direction A1 du trou oblong. Cet effet de butée complète l'action des forces de frottement dues au serrage des deux surfaces qui tendent elles aussi à empêcher tout déplacement de la rotule 12 par rapport à la bielle 10.

Avantageusement, on prévoit que le profil de la surface de portée 18 soit déterminé par des bords qui présentent, en section par un plan parallèle à l'axe A2, un angle vif de manière à mieux marquer encore le contour 34 de l'empreinte 32 lors du serrage.

De préférence, le profil de la surface de portée 18 de la rotule 12 n'est pas circulaire de sorte que le contour 34 de l'empreinte 32 et le profil de la surface de portée 18 coopèrent pour empêcher la rotule 12 de tourner autour de son axe A2 par rapport à la bielle 10. Par ailleurs, on prévoira de préférence une rondelle à dents 36 interposée entre la face inférieure 22 de la bielle 10 et l'écrou 28 pour éviter que ce dernier ne puisse se dévisser.

Dans l'exemple de réalisation illustré sur les figures, la couche de surface déformable plastiquement de la bielle 10 est réalisée sous la forme d'un moletage susceptible d'être obtenu de manière simple et économique.

Toutefois, on peut choisir de réaliser cette couche de surface déformable plastiquement sous la forme d'un insert de faible épaisseur réalisé dans un matériau plus tendre que le matériau constituant la bielle 10 et la surface de portée 18.

## Revendications

1. Dispositif d'entraînement pour un système d'essuie-glace de véhicule automobile, du type comportant deux bielles qui sont reliées par une articulation à rotule, du type dans lequel l'une (10) des bielles, sensiblement en forme de plaque, porte une rotule (12) munie d'une surface inférieure de portée (18) et d'une tige filetée (24) qui s'étend perpendiculairement à la surface de portée (18) et qui est engagée au travers d'un orifice oblong (26) aménagé dans la bielle (10), et du type dans lequel un écrou (28) est vissé sur la tige filetée (24), en appui contre une face inférieure (22) de la bielle (10), pour serrer la surface de butée (18) contre une face supérieure (20) de la bielle (10),
caractérisé en ce que l'une de ces deux faces en regard, la face supérieure (20) de la bielle (10) et la surface de portée (18) de la rotule (12), comporte une couche de surface (30) qui est déformée plastiquement lors du serrage de telle sorte qu'une empreinte de l'une de ces faces (18, 20) est marquée dans la face de l'autre (20, 18) ), pour assurer l'immobilisation de la rotule (12) par rapport à la bielle (10) selon la direction d'allongement de l'orifice oblong (26).

2. Dispositif d'entraînement selon la revendication 1, caractérisé en ce que le profil de la surface de butée (18) n'est pas circulaire de telle sorte que la rotule (12) est immobilisée en rotation par rapport à la bielle (10).

3. Dispositif d'entraînement selon l'une des revendications 1 ou 2, caractérisé en ce que, en section axiale, le profil de la surface de butée (18) est délimité par des bords à angles vifs.

4. Dispositif d'entraînement selon l'une quelconque des revendications précédentes, caractérisé en ce que la couche de surface à déformer comporte un moletage (30) qui est déformée plastiquement lors du serrage.

5. Dispositif d'entraînement selon la revendication 4, caractérisé en ce que le moletage (30) est réalisé sous la forme de stries agencées perpendiculairement à la direction d'allongement (A1) de l'orifice oblong (26).

6. Dispositif d'entraînement selon l'une quelconque des revendications précédentes, caractérisé en ce que l'orifice oblong (26) est allongé selon la plus grande dimension de la bielle (10).

7. Dispositif d'entraînement selon l'une quelconque des revendications précédentes, caractérisé en ce qu'une rondelle à dents (36) est interposée entre la face inférieure (22) de la bielle (10) et l'écrou (28) pour immobiliser ce dernier en rotation.
